(19) Europäisches Patentamt
European Patent Office
Office européen des brevets

(11) **EP 1 855 095 B1**

(12) **EUROPÄISCHE PATENTSCHRIFT**

(45) Veröffentlichungstag und Bekanntmachung des Hinweises auf die Patenterteilung:
**16.02.2011 Patentblatt 2011/07**

(51) Int Cl.:
***G01K 17/06*** *(2006.01)*

(21) Anmeldenummer: **07008734.1**

(22) Anmeldetag: **28.04.2007**

(54) **Verfahren und Einrichtung zur nutzerspezifischen Verbrauchskostenerfassung bei gemeinschaftlich genutzten kältetechnischen Anlagen**

Method and device for user-specific logging of consumption costs for air-conditioning facilities used in common refrigerating systems

Procédé et dispositif destinés à la saisie de coûts d'utilisation spécifiques à l'utilisateur pour installations de refroidissement utilisées par la société

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **11.05.2006 DE 102006022956**

(43) Veröffentlichungstag der Anmeldung:
**14.11.2007 Patentblatt 2007/46**

(73) Patentinhaber: **Tiede, Christoph**
**68647 Biblis (DE)**

(72) Erfinder: **Tiede, Christoph**
**68647 Biblis (DE)**

(74) Vertreter: **Dreiss**
**Patentanwälte**
**Postfach 10 37 62**
**70032 Stuttgart (DE)**

(56) Entgegenhaltungen:
**WO-A-03/060448      DE-A1- 3 612 121**
**GB-A- 2 020 426      US-A- 5 949 232**

**Beschreibung**

Die vorliegende Erfindung bezieht sich auf ein Verfahren und eine Einrichtung zur nutzerspezifischen Verbrauchskostenerfassung bei gemeinschaftlich genutzten kältetechnischen Anlagen während eines Abrechnungszeitraums, nach dem Oberbegriff des Anspruchs 1 beziehungsweise dem des Anspruchs 6.

In vielen bestehenden sowie in immer neu errichteten Gewerbeimmobilien, wie Einkaufszentren, Bürobauten, aber auch in Flughäfen und Bahnhöfen werden immer größere gemeinschaftlich genutzte Kälteerzeugungs- und Verteilungsanlagen installiert. Sie bieten den jeweiligen Nutzern nicht nur die Möglichkeit zur Raumkühlung mit der Klima- und Lüftungsanlage, sondern darüber hinaus oft auch jedem einzelnen Nutzer den Anschluss von Kühlräumen oder sekundären Raumkühlsystemen.

Die Kälteenergiemengen werden üblicherweise mit handelsüblichen, auf diese System-Temperaturen ausgelegten Wärmemengenzählern, die für den Einsatz in Wasser dieser Temperaturen zugelassen sind, erfasst und am Ende eines Erfassungszeitraums von beispielsweise einem Jahr mit einem Kälteenergiepreis gesamthaft verrechnet. Die ebenfalls über den gesamten Betriebszeitraum erfassten Energiemengen zur Kälteerzeugung, wie beispielsweise elektrische Energie, werden ebenfalls abgelesen und zur Ermittlung des Kälteenergiepreises herangezogen. Dabei wird der Kälteenergiepreis aus dem Verhältnis von gesamter elektrischer Energiemenge zu gesamter verbrauchter Kälteenergiemenge multipliziert mit dem Elektroenergiepreis. Die nutzerspezifisch erfassten, das heißt verbrauchten Kälteenergiemengen, werden dann mit dem ermittelten Kältepreis multipliziert und ergeben die Kälteenergiekosten für den entsprechenden Abrechnungszeitraum von beispielsweise einem Kalenderjahr.

Diese Art der nutzerspezifischen Verbrauchskostenerfassung und Abrechnung über den betreffenden Zeitraum wird jedoch nicht der Tatsache gerecht, dass der Aufwand zur Kälteenergieerzeugung im Abrechnungszeitraum sehr stark schwankt. Bekannt ist es, dass die Kälteerzeugung, beispielsweise mit einem zentralen Kaltwassersatz und außen aufgestellten Trocken- oder Nasskühlern mit stark schwankenden Aufwendungen verbunden ist. Indikator hierfür ist die Leistungsziffer ε, die das Verhältnis von Nutzen zu Aufwand für die Kälteerzeugung bezeichnet und die unter anderem direkt abhängig von der Außentemperatur ist, die bekanntlich zwischen etwa - 15° C und + 35° C in sehr unterschiedlichen Konstellationen während des Abrechnungszeitraums von beispielsweise einem Kalenderjahr schwankt. So kann die Leistungsziffer ε und damit das Verhältnis von Kühlenergie zu von außen zugeführter elektrischer Energie in einem Bereich zwischen 2 und 30 schwanken. Beispielsweise schwankt die Leistungsziffer ε beim Kompressorkühlbetrieb zwischen 2 und 6, während sie beim Freikühlbetrieb zwischen 6 und 30 schwankt. Gerade bei Kälteerzeugungsanlagen mit Freikühlfunktion, das heißt zu Betriebszeiten mit niedrigen Außentemperaturen, wird die Kaltwassererzeugung ohne Kälteverdichterbetrieb vorgenommen, nämlich nur durch die freie Kühlung des Kaltwassers durch die Außenluft im Rückkühlwerk. Hier wird dann Kälteenergie sehr kostengünstig erzeugt, da der Aufwand lediglich durch die Pumpen- und Ventilatorenmotoren in den Rückkühlwerken bestimmt wird, so dass Leistungsziffern bis e = 30 möglich sind.

Betrachtet man deshalb das Gesamtsystem "kältetechnische Anlage" unter dem Gesichtspunkt der Kälteenergieerzeugung, Verteilung, Erfassung und Abrechnung, wird deutlich, dass eine ausschließliche Erfassung der Aufwands- und Nutzenenergien über einen Abrechnungszeitraum von üblicherweise einem Jahr, wie einem Kalenderjahr, oder ähnlich lange zu keiner gerechten Umlage der Kälteenergiekosten, die dem Energieverbrauch des einzelnen Nutzers Rechnung trägt, führt.

Aus der WO 03/060 448 A1 ist eine Vorrichtung und ein Verfahren zum Zuweisen von Heizkosten bekannt, was vom Wärmekomfortniveau jedes einzelnen Bewohners abhängig sein soll. Hierzu werden ein von der Innenraumtemperatur abhängiger erster Wert und ein sich auf die Außentemperatur beziehender zweiter Wert über einen bestimmten Zeitraum miteinander verglichen und dieses Ergebnis zur Bildung eines Verbrauchsindex gewichtet, und zwar durch einen Verbrauchsindex für jeden Raum bezogen auf die Verbrauchsindizes aller beheizten Räume einer Wohnung. Aufgrund des Verhältnisses zwischen dem Raumverbrauchsindex und dem Wohnungsverbrauchsindex werden die Heizkosten zugeordnet.

Die DE 36 12 121 C2 befasst sich mit einem System zur Erfassung und Kontrolle der Leistungen von Versorgungsunternehmen an Endverbraucher über ein Datenübertragungsnetz und hat sich zur Aufgabe gestellt, den Verbraucher über die anfallenden Kosten auf dem Laufenden zu halten und den Versorgungsunternehmen eine Fernablesung und Kontrolle der Verbrauchsdaten zu ermöglichen. Hierbei geht es lediglich darum, ein Ablesen des Verbrauchszählers im Haus durch einen Angestellten des Versorgungsunternehmens zu vermeiden. Auch wird lediglich die verbrauchte Energie einer Wohneinheit oder eines Gebäudes insgesamt abgelesen, ohne dass dieser verbrauchten Energie die zu unterschiedlichen Zeiten unterschiedliche Gestehungskosten für diese zugeführte Energie berücksichtigt werden.

Die US 5,949,232 A verwendet einen Mikroprozessor, um die verbrauchte Energie jeweils einer Einheit zur gesamten verbrauchten Energie aller Einheiten ins Verhältnis zu setzen. Mehr ergibt sich hieraus nicht, jedenfalls nicht, die von außen zugeführter Energie bezüglich der Gestehungskosten zu verschiedenen Zeiten zu berücksichtigen.

In der GB 1 020 426 A schließlich werden mit einem inneren Temperaturfühler die Innenraumtemperatur mit einem äußeren Temperaturfühler die Außentemperatur gemessen und ins Verhältnis gesetzt. Auch dies ist zum Anmeldungsgegenstand grundverschieden.

Aufgabe der vorliegenden Erfindung ist es deshalb, ein Verfahren und eine Einrichtung zur nutzerspezifischen Verbrauchskostenerfassung bei gemeinschaftlich genutzten kältetechnischen Anlagen während eines Abrechnungszeitraumes der eingangs genannten Art zu schaffen, bei dem beziehungsweise bei der über den gegebenen Abrechnungszeitraum hinweg unterschiedlich hohe Kälteenergiekosten nutzerspezifisch berücksichtigt werden können.

Zur Lösung dieser Aufgabe sind bei einem Verfahren und einer Einrichtung zur nutzerspezifischen Verbrauchskostenerfassung bei gemeinschaftlich genutzten kältetechnischen Anlagen während eines Abrechnungszeitraums der genannten Art die im Anspruch 1 beziehungsweise die im Anspruch 6 angegebenen Merkmale vorgesehen.

Durch die erfindungsgemäßen Maßnahmen ist eine automatische Energieverbrauchskostenermittlung für gemeinschaftlich genutzt kältetechnische Anlagen erreicht, die nutzerspezifische Kälteenergiekosten entsprechend den Schwankungen der Kälteenergieerzeugungsaufwendungen erfasst und verrechnet. Damit wird dem Energieverbrauch der einzelnen Nutzer dahingehend Rechnung getragen, dass der Kälteenergieverbrauch jedes Nutzers zu Zeiten mit hohem Kälteenergieerzeugungsaufwand entsprechend hoch belastet wird, jedoch zu Zeiten mit niedrigem Kälteenergieerzeugungsaufwand entsprechend niedrig belastet wird, beispielsweise zu Zeiten des Freikühlbetriebes, in den Nachstunden und dergleichen. Auf diese Weise können erhebliche Energieeinsparpotentiale allein durch angepasstes Nutzerverhalten ohne wesentliche zusätzliche Investitionskosten in die Anlagetechnik und Einschränkungen in den Komfort generiert werden.

Vorteilhafte Ausgestaltungen ergeben sich verfahrensgemäß aus den Merkmalen eines oder mehrerer der Ansprüche 2 bis 5 und einrichtungsgemäß aus den Merkmalen des Anspruchs 7.

Es wird also für jedes finite Zeitfenster der Kälteenergiepreis ermittelt und mit den erfassten Kälteenergiemengen verrechnet. Die erfassten Kälteenergiemengen und Kälteenergiekosten der jeweiligen finiten Zeitfenster werden kumuliert über den gesamten Abrechnungszeitraum (beispielsweise ein Jahr) benutzerspezifisch erfasst.

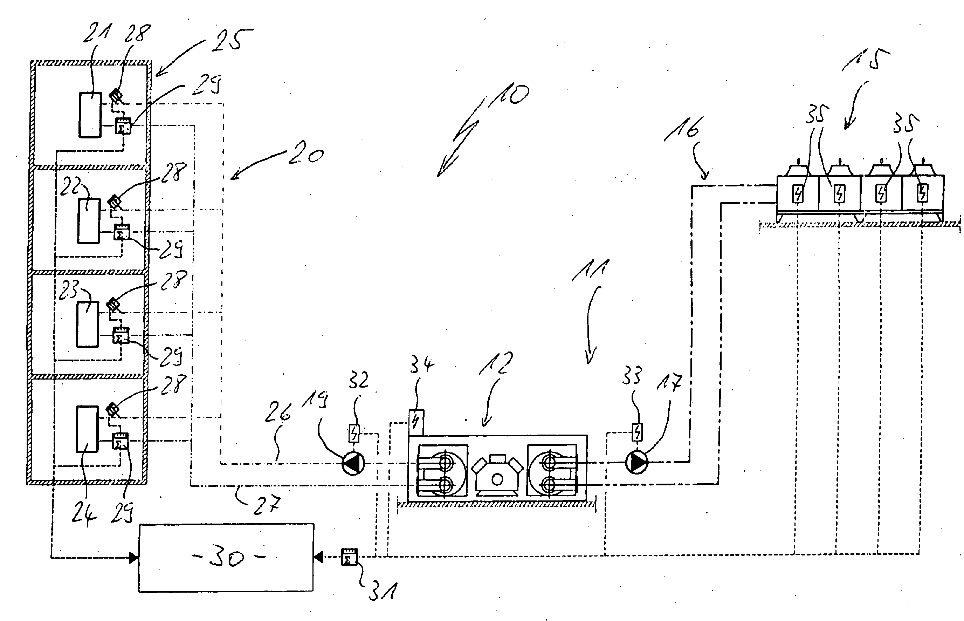

Weitere Einzelheiten der Erfindung sind der folgenden Beschreibung zu entnehmen, in der die Erfindung anhand des in der Zeichnung dargestellten Ausführungsbeispiels näher beschrieben und erläutert ist. Die einzige Figur zeigt in schematischer und teilweiser Blockdarstellung eine kältetechnische Anlage einschließlich Verbrauchskostenerfassung gemäß einem bevorzugten Ausführungsbeispiel vorliegender Erfindung.

Die Zeichnung zeigt beispielsweise eine Einrichtung 10 zur nutzerspezifischen Verbrauchskostenerfassung bei einer von mehrere Nutzern 21 bis 24 gemeinschaftlich genutzten kältetechnischen Anlage 11 während eines vorgegebenen Abrechnungszeitraums. Die kältetechnische Anlage 11 besitzt beispielsweise eine Kältemaschine 12, die mit Wärmetauschern sowie einem Verdichter bestückt ist. Die Kältemaschine 12 ist über einen Kühlwasserkreislauf 16, in dem eine Förderpumpe 17 eingebaut ist, mit einem Rückkühlwerk 15 verbunden. Primärseitig ist die Kältemaschine 12 über einen mit einer Förderpumpe 19 bestückten Kaltwasserkreislauf 20 mit den einzelnen Nutzern 21, 22, 23 und 24 in beispielsweise einem gemeinsamen Gebäude 25 verbunden. Auf diese Weise wird das Kaltwasser im Kaltwasserkreislauf 20 entweder über einen Wärmetauscher unmittelbar vom über das Rückkühlwerk 15 gekühlten Kühlwasserkreislauf auf eine vorgegebene Temperatur runtergekühlt beziehungsweise auf dieser vorgegebenen Kühltemperatur gehalten oder aktiv über einen Verdichter der Kältemaschine 12.

Sowohl der mit der Förderpumpe 19 bestückte Vorlauf 26 als auch der Rücklauf 27 des Kaltwasserkreislaufes 20 sind mit den einzelnen Nutzern 21 bis 24 parallel verbunden, wobei jedem Nutzer 21 bis 24 zugeordnet im Vorlauf 26 ein Temperaturfühler 28 und im Rücklauf ein mit einem weiteren Temperaturfühler versehener Verbrauchszähler 29 vorgesehen ist. Der Temperaturfühler 28 im Vorlauf 26 ist mit dem Verbrauchszähler 29 verbunden. Als Verbrauchszähler kommt beispielsweise ein üblicher Wärmemengenzähler in Frage, der für den Einsatz in Wasser für einen Temperaturbereich zwischen 0° C und etwa 12° C zugelassen ist. Werden andere Wärmeträgermedien verwendet, werden entsprechend zugelassene Zählereinrichtungen verwendet.

Die Einrichtung 10 zur Verbrauchskostenerfassung und -auswertung besitzt ferner eine mikroprozessorgesteuerte Automationseinrichtung 30, die konfigurierbar oder programmierbar ist und die einerseits mit den Kälteenergie-Verbrauchszählern 29 aller Nutzer 21 bis 24 und andererseits mit einem Aufwandsenergie-Zähler 31 verbunden ist. Dieser Aufwandsenergie-Zähler 31 stellt beim dargestellten Ausführungsbeispiel einen elektrischen Zähler (Elektroarbeitszähler) dar, da die Kälteanlage 11 beim Ausführungsbeispiel ausschließlich mit elektrischer Energie als von außen zugeführten Aufwandsenergie arbeitet. So ist der elektrische Zähler 31 mit dem Elektromotor 32, 33 sowohl der Förderpumpe 19 im Kaltwasserkreislauf 20 als auch mit der Förderpumpe 17 im Kühlwasserkreislauf 16 und außerdem mit dem Elektromotor 34 des Verdichters der Kältemaschine sowie den elektrischen Antrieben 35 des Rückkühlwerks 15 und dergleichen verbunden.

Mit der mikroprozessorgesteuerten Automationseinrichtung 30 werden somit die Kälteenergieverbräuche der einzelnen Nutzer 21 bis 24 sowie die hier elektrische Aufwandsenergie für die Kälteenergieerzeugung erfasst. Dies erfolgt jeweils über einen bestimmten Erfassungs- und Abrechnungszeitraum von beispielsweise einem Jahr oder einer ähnlich langen Dauer und hierbei vorzugsweise während eines Kalenderjahres. Da der Aufwand für die Kälteenergieerzeugung, das heißt hier der Einsatz an elektrischer Energie nicht nur während der 24 Stunden eines Tages schwanken kann, sondern in jedem Falle auch während des Erfassungs- und Abrechnungszeitraumes erheblich schwankt, weil das Rückkühlwerk 15 je nach Außentemperatur erheblich zur Kälteenergieerzeugung beitragen kann, ohne dass es dazu eines Verdichters bedarf, sind in der mikroprozessorgesteuerten Automationseinrichtung 30 finite Zeitfenster zum Erfassen sowohl der hier elektrischen Aufwandsenergie als auch zum Erfassen der von den Nutzern 21 bis 24 einzeln und gemeinsam verbrauchten Kälteenergiemengen eingerichtet. Mit anderen Worten, innerhalb jedes finiten Zeitfensters werden diese Energiemengen abschließend erfasst und gespeichert. Somit werden während und/oder am Ende eines Erfassungsbeziehungsweise Abrechnungszeitraumes die gespeicherten Teil- und Gesamtenergiemengen pro finitem Zeitfenster aufaddiert, wobei für jedes finite Zeitfenster die Kosten für die Kälteenergie pro Kälteenergieeinheit nach folgender Gleichung

$$\{K_{K\ddot{a}lteenergie}\}\frac{€}{kWh_{K\ddot{a}lte}} = \frac{\{K_{Elektro}\}\dfrac{€}{kWh_{Elektro}} \cdot \{Q_{Elektro}\}kWh_{Elektro}}{\{Q_{K\ddot{a}lte}\}kWh_{K\ddot{a}lte}}$$

errechnet und gespeichert werden. Dabei sind K die Kosten pro Energieeinheit (in €/kWh) und Q die verbrauchte Energiemenge (in kWh) aufwandsseitig (Elektro) beziehungsweise nutzerseitig (Kälte). Diese Kosten für die Kälteenergieeinheit ($K_{K\ddot{a}lteenergie}$) ergeben sich nach dieser Gleichung aus dem Verhältnis von gesamter Aufwandsenergiemenge ($Q_{Elektro}$) zu gesamter Kälteenergiemenge ($Q_{K\ddot{a}lte}$) multipliziert mit den Kosten pro Aufwandsenergieeinheit ($K_{Elektro}$), jeweils für ein finites Zeitfenster ($finZF_i$).

Es versteht sich, dass dabei nicht nur die über die Zeit unterschiedlichen Aufwandsenergiemengen automatisch erfasst werden, sondern dass auch bei Preisänderungen die Kosten ($K_{Elektro}$) für die Aufwandsenergieeinheit zu einem bestimmten Zeitpunkt verändert eingeben und damit berücksichtigt werden können, wenn sich dieser Preis von Seiten des Energielieferanten ändert.

Zum Erfassen der unterschiedlichen Aufwandsenergiemengen (Elektroenergiemenge) und Verbrauchsenergiemengen (Kälteenergiemenge) innerhalb jedes finiten Zeitfensters sind sowohl die Kälteenergie-Verbrauchszähler 29 als auch die oder der Elektroenergiezähler 31 mit einem Impulsausgang zum Abgeben einer bestimmten Anzahl von Impulsen pro Energieeinheit oder mit einer Bus-Schnittstelle versehen. Diese Impulse werden in der mikroprozessorgesteuerten Automationseinrichtung 30 erfasst und innerhalb jedes finiten Zeitfensters aufaddiert.

Die Bestimmung der finiten Zeitfenster für die Erfassungs- und Berechnungsalgorithmen zur Ermittlung der jeweiligen Kälteenergieerzeugungspreise und der jeweiligen Kälteenergiekosten hängt im Wesentlichen von der Impulswertigkeit der eingesetzten Energiezähler 29, 31 für die Kälteenergiemenge beziehungsweise Elektroenergiemenge ab. Die Wahl der Impulswertigkeit der eingesetzten Energiezähler 29, 31 wird so vorgenommen, dass möglichst kleine Zeitfenster auch für Teillastbetriebszustände erreicht werden. Ist beispielsweise eine Kühlregisterleistung von 70 kW vorgesehen, so ergibt sich im Volllastfall alle 50 Sekunden ein Impuls für eine Kilowattstunde und im Teillastfall von beispielsweise 10 % der Leistung (7 kW) alle 450 Sekunden ein Impuls für eine Kilowattstunde. Unter Berücksichtigung dieses Teillastfalles ergibt sich bei diesem Beispiel ein finites Zeitfenster von 8 Minuten. So wird sichergestellt, dass innerhalb dieser finiten Zeitfenster mindestens ein Zählimpuls ausgewertet wird. Grundsätzlich gilt, die finiten Zeitfenster so klein wie möglich zu wählen, um so präzise wie möglich die Kälteerzeugungskosten den jeweiligen Kälteenergieverbräuchen zuordnen zu können.

Es werden also sämtliche Kälteenergieverbräuche (Nutzen) durch die eingehenden Zählimpulse der Kälteenergiezähler 29 nutzerspezifisch in finiten Zeitfenstern (finZF) erfasst und innerhalb dieser finiten Zeitfenster sämtliche Elektroenergieverbräuche (Aufwand), um anschließend für die jeweiligen finiten Zeitfenster den tatsächlichen Kälteenergiepreis aus dem Verhältnis von Nutzen zu Aufwand zu ermitteln. Hierfür werden die Gesamtkälteenergieverbräuche aller Nutzer im System als Summe aller Zählwerte addiert sowie alle Gesamtelektroenergieverbräuche aller Komponenten, die zur Kälteerzeugung erforderlich sind, addiert und mit folgender Gleichung der Kälteenergiepreis für das jeweilige finite Zeitfenster ($finZF_i$) berechnet:

$$\{K_{K\ddot{a}lteenergie,finZF1...i}\}\frac{€}{kWh_{K\ddot{a}lte}} = \frac{\{K_{Elektro}\}\dfrac{€}{kWh_{Elektro}} \cdot \{Q_{ElektroGESAMT,finZF...i}\}kWh_{Elektro}}{\{Q_{K\ddot{a}lteGESAMT,finZF1...i}\}kWh_{K\ddot{a}lte}}$$

Die Kälteenergieverbrauchskosten eines Nutzers i aus den Nutzern 21 bis 24 berechnen sich anschließend für jedes finite Zeitfenster ($finZF_i$) nach folgender Gleichung:

$$\{K_{K\ddot{a}lteenergie,finZF1...i,Benutzeri}\}\euro = \{Q_{K\ddot{a}lteenergie,finZF1...i,Benutzeri}\}kWh_{K\ddot{a}lte} \cdot \{K_{K\ddot{a}lteenergie,finZF1...i}\}\frac{\euro}{kWh_{K\ddot{a}lte}}$$

In Nutzerkonten werden die erfassten Kälteenergiemengen kumuliert erfasst, ebenso werden in diesen Nutzerkonten die Kälteenergieverbrauchskosten der jeweiligen finiten Zeitfenster kumuliert erfasst. Ergebnis ist am Ende eines Erfassungs- beziehungsweise Abrechnungszeitraumes von beispielsweise einem Kalenderjahr oder beliebig kürzer oder länger, für jeden Nutzer i aus den Nutzern 21 bis 24 die Summe aller verbrauchten Kälteenergiemengen und die Summe aller Kälteenergiekosten der jeweiligen finiten Zeitfenster sowie die mitgeschriebenen beziehungsweise geloggten Kälteenergieverbrauchs- und Kälteenergiekostenverläufe über den gesamten Abrechnungszeitraum für jeden Nutzer und der Gesamtkälteanlage aufzuzeigen und festzuschreiben. Mit diesen Informationen können Plausibilitätsbetrachtungen vorgenommen sowie Benchmarks zur anlagetechnischen Bewertung gebildet werden.

**Patentansprüche**

1.   Verfahren zur nutzerspezifischen Verbrauchskostenerfassung bei gemeinschaftlich genutzten kältetechnischen Anlagen während eines Abrechnungszeitraumes, wobei die zur Erzeugung der Kälteenergie notwendige, der Anlage von außen zugeführte Energie, wie Elektroenergie, und die von jeder Nutzereinheit verbrauchte Kälteenergie gemessen werden, **dadurch gekennzeichnet, dass** der Abrechnungszeitraum in eine Vielzahl von festgelegten finiten Zeitfenstern unterteilt wird, innerhalb derer jeweils sowohl die von außen zugeführte Energie als auch die Summe der von allen Nutzereinheiten verbrauchten Kälteenergie gemessen werden, dass die Gesamtkosten für die verbrauchte Kälteenergie für jeden Nutzer im Abrechnungszeitraum aus der Summe der Einzelkosten für die Kälteenergie in den einzelnen finiten Zeitfenstern und diese Summe der Einzelkosten aus der Summe der Produkte für jedes finite Zeitfenster aus verbrauchter Kälteenergie und den Kosten pro Energieeinheit der Kälteenergie ermittelt werden, und dass während jedes finiten Zeitfensters die von außen zugeführte Energie und die von allen Nutzern (21 bis 24) verbrauchte Kälteenergie abgespeichert und ins Verhältnis gesetzt wird und die Kosten pro Energieeinheit für die Kälteenergie in jedem finiten Zeitfenster aus dem Verhältnis von außen zugeführter Energie und der Summe der von den Nutzern (21 bis 24) verbrauchten Kälteenergie mal den gegebenen Kosten pro Energieeinheit für die von außen zugeführten Energie errechnet werden.

2.   Verfahren nach Anspruch 1, **dadurch gekennzeichnet, dass** unter Ansatz der Kosten pro Energieeinheit für die von außen zugeführte Energie die Kosten pro Energieeinheit für die Kälteenergie innerhalb der betreffenden finiten Zeitfenster bestimmt werden.

3.   Verfahren nach mindestens einem der vorhergehenden Ansprüche, **dadurch gekennzeichnet, dass** sowohl die von außen zugeführte Energie als auch die von einem Nutzer verbrauchte Kälteenergie durch Energiezähler mit Impulsausgang oder Bus-Schnittstelle erfasst werden und dass die hiervon pro Energieeinheit abgegebenen Ausgangsimpulse innerhalb jedes finiten Zeitfensters gezählt und aufsummiert werden.

4.   Verfahren nach mindestens einem der vorhergehenden Ansprüche, **dadurch gekennzeichnet, dass** das finite Zeitfenster eine zum Zählen des kleinsten zu erwartenden Teilenergieverbrauchs geeignete Breite, vorzugsweise im Minutenbereich aufweist.

5.   Verfahren nach Ansprüchen 3 und 4, **dadurch gekennzeichnet, dass** innerhalb des finiten Zeitfensters während des kleinsten zu erwartenden Teilenergieverbrauchs zumindest ein Impuls oder Signal abgegeben wird.

6.   Einrichtung zur nutzerspezifischen Verbrauchskostenerfassung bei gemeinschaftlich genutzten kältetechnischen Anlagen (11) während eines Abrechnungszeitraumes, mit mindestens einem Zähler (31) für von außen zugeführte Energie, vorzugsweise elektrische Energie, für beispielsweise eine Kältemaschine (12) und mit jedem Nutzer (21 bis 24) zugeordneten Zählern (29) vorzugsweise Wärmemengenzählern, für die mittels eines Kühlmediums zugeführte und verbrauchte Kälteenergie, **gekennzeichnet durch** eine mikroprozessorgesteuerte Vorrichtung (30), in der eine Vielzahl von finiten Zeitfenstern, deren Summe einen definierten Abrechnungszeitraum ergibt, eingerichtet ist und die einerseits mit dem mindestens einen Zähler (31) für die von außen zugeführte Energie und andererseits mit allen den Nutzern (21 bis 24) zugeordneten Zählern (29) für die verbrauchte Kälteenergie derart verbunden ist, dass während jedes finiten Zeitfensters die von außen zugeführte Energie und die von allen Nutzern (21 bis 24) verbrauchte Kälteenergie abgespeichert und ins Verhältnis gesetzt wird, und **dadurch**, dass die mikroprozessorgesteuerte Vorrichtung (30) derart ausgebildet ist, dass sie die Kosten pro Energieeinheit für die Kälteenergie in jedem finiten Zeitfenster aus dem Verhältnis von außen zugeführter Energie und der Summe der von den Nutzern (21 bis 24) verbrauchten Kälteenergie mal den gegebenen Kosten pro Energieeinheit für die von außen zugeführte Energie errechnet.

**7.** Einrichtung nach Anspruch 6, **dadurch gekennzeichnet, dass** die mikroprozessorgesteuerte Vorrichtung (30) programmierbar oder konfigurierbar ist.

**Claims**

**1.** A method for user-specific consumption cost acquisition in collectively used refrigeration plants during an accounting period, wherein the energy supplied to the plant from the outside and required for generating the refrigerating energy, such as electrical energy, and the refrigerating energy consumed by each user unit are measured, **characterized in that** the accounting period is divided in a plurality of specified finite time windows, within which both the energy supplied from the outside and the sum of the refrigerating energy consumed by all of the user units are respectively measured, that the total costs for the consumed refrigerating energy for each user in the accounting period is determined from the sum of the individual costs for the refrigerating energy in the individual finite time windows, and this sum of the individual costs is determined from the sum of the products of consumed refrigerating energy and the costs per energy unit of the refrigerating energy for each finite time window, and that the energy supplied from the outside and the refrigerating energy consumed by all of the users (21 to 24) is stored and proportioned during each finite time window, and the costs per energy unit for the refrigerating energy in each finite time window are calculated from the ratio of the energy supplied from the outside and the sum of the refrigerating energy consumed by the users (21 to 24) multiplied by the given costs per energy unit for the energy supplied from the outside.

**2.** The method according to claim 1, **characterized in that** the costs per energy unit for the refrigerating energy within the relevant finite time windows are determined with fixing of the costs per energy unit for the energy supplied from the outside.

**3.** The method according to at least one of the preceding claims, **characterized in that** both the energy supplied from the outside and the refrigerating energy consumed by a user are acquired by energy meters with pulse output or bus interface and that the output pulses output hereof per energy unit are counted and added within each finite time window.

**4.** The method according to at least one of the preceding claims, **characterized in that** the finite time window has a width suitable for counting the smallest partial energy consumption to be expected, preferably in the range of minutes.

**5.** The method according to claims 3 and 4, **characterized in that** at least one pulse or signal is output within the finite time window during the smallest partial energy consumption to be expected.

**6.** A device for user-specific consumption cost acquisition in collectively used refrigeration plants (11) during an accounting period, including at least one meter (31) for energy supplied from the outside, preferably electrical energy, for example, for a refrigerating machine (12), and including meters (29) associated with each user (21 to 24), preferably heat quantity meters, for the consumed refrigerating energy supplied by means of a coolant, **characterized by** a microprocessor-controlled device (30), in which a plurality of finite time windows, the sum of which results in a defined accounting period, is set and which is connected to the at least one meter (31) for the energy supplied from the outside on the one hand, and to all of the meters (29) associated with the users (21 to 24) for the consumed refrigerating energy on the other hand, such that the energy supplied from the outside and the refrigerating energy consumed by all of the users (21 to 24) is stored and proportioned during each finite time window, and in that the microprocessor-controlled device (30) is formed such that it calculates the costs per energy unit for the refrigerating energy in each finite time window from the ratio of energy supplied from the outside and the sum of the refrigerating energy consumed by the users (21 to 24) multiplied by the given costs per energy unit for the energy supplied from the outside.

**7.** The device according to claim 6, **characterized in that** the microprocessor-controlled device (30) is programmable or configurable.

**Revendications**

1. Procédé pour le calcul des coûts de consommation, spécifiques à chaque utilisateur des installations de refroidissement collectives pendant une période de calcul, l'énergie, telle que l'énergie électrique, nécessaire pour la production de l'énergie de refroidissement et acheminée vers l'installation depuis l'extérieur, et l'énergie de refroidissement consommée par chaque unité d'utilisateur étant mesurées, **caractérisé en ce que** la période de calcul est subdivisée en une pluralité de fenêtres de temps finies définies, à l'intérieur desquelles sont mesurées dans chaque cas l'énergie acheminée de l'extérieur, de même que la somme de l'énergie de refroidissement consommée par toutes les unités d'utilisateur, **en ce que** les coûts totaux de l'énergie de refroidissement consommée sont déterminés pour chaque utilisateur dans la période de calcul à partir de la somme des coûts individuels pour l'énergie de refroidissement dans les différentes fenêtres de temps finies, et cette somme des coûts individuels est déterminée à partir de la somme des produits pour chaque fenêtre de temps finie formée par l'énergie de refroidissement consommée et les coûts par unité d'énergie de l'énergie de refroidissement, et **en ce que** pendant chaque fenêtre de temps finie, l'énergie acheminée de l'extérieur et l'énergie de refroidissement consommée par tous les utilisateurs (21 à 24) sont enregistrées et sont proportionnées, et les coûts par unité d'énergie pour l'énergie de refroidissement dans chaque fenêtre de temps finie sont calculés à partir du rapport entre l'énergie acheminée de l'extérieur et la somme de l'énergie de refroidissement consommée par les utilisateurs (21 à 24) multiplié par les coûts donnés par unité d'énergie pour l'énergie acheminée de l'extérieur.

2. Procédé selon la revendication 1, **caractérisé en ce que** les coûts par unité d'énergie pour l'énergie de refroidissement sont déterminés à l'intérieur des fenêtres de temps finies moyennant l'évaluation des coûts par unité d'énergie pour l'énergie acheminée de l'extérieur.

3. Procédé selon au moins l'une des revendications précédentes, **caractérisé en ce que** tant l'énergie acheminée de l'extérieur que l'énergie de refroidissement consommée par un utilisateur sont enregistrées par des compteurs d'énergie avec une sortie d'impulsion ou une interface de bus, et **en ce que** les impulsions de sortie délivrées par unité d'énergie par lesdits compteurs sont comptées à l'intérieur de chaque fenêtre de temps finie et additionnées.

4. Procédé selon au moins l'une des revendications précédentes, **caractérisé en ce que** la fenêtre de temps finie possède une largeur, de préférence dans la plage des minutes, appropriée au comptage de la plus petite consommation d'énergie partielle à escompter.

5. Procédé selon les revendications 3 et 4, **caractérisé en ce qu'**au moins une impulsion ou signal est délivré à l'intérieur de la fenêtre de temps finie pendant la plus petite consommation d'énergie partielle à escompter.

6. Installation pour le calcul des coûts de consommation, spécifiques à chaque utilisateur des installations de refroidissement (11) collectives pendant une période de calcul, comportant au moins un compteur (31) pour l'énergie acheminée de l'extérieur, de préférence de l'énergie électrique, pour une machine frigorifique (12), par exemple, et comportant des compteurs (29) affectés à chaque utilisateur (21 à 24), de préférence des compteurs de quantité de chaleur, pour l'énergie de refroidissement acheminée au moyen d'un fluide réfrigérant et consommée, **caractérisé par** un dispositif (30), qui est commandé par microprocesseur et dans lequel sont configurées une pluralité de fenêtres de temps finies, dont la somme donne une période de calcul définie, et lequel est relié, d'une part, avec ledit au moins un compteur (31) pour l'énergie acheminée de l'extérieur et, d'autre part, avec tous les compteurs (29) affectés à tous les utilisateurs (21 à 24) pour l'énergie de refroidissement consommée, de telle sorte que pendant chaque fenêtre de temps finie l'énergie acheminée de l'extérieur et l'énergie de refroidissement consommée par tous les utilisateurs (21 à 24) sont enregistrées et sont proportionnées, et en ce que le dispositif (30) commandé par microprocesseur est réalisé de telle sorte qu'il calcule les coûts par unité d'énergie pour l'énergie de refroidissement dans chaque fenêtre de temps finie à partir du rapport entre l'énergie acheminée de l'extérieur et la somme de l'énergie de refroidissement consommée par les utilisateurs (21 à 24) multiplié par les coûts donnés par unité d'énergie pour l'énergie acheminée de l'extérieur.

7. Installation selon la revendication 6, **caractérisé en ce que** le dispositif (30) commandé par microprocesseur est programmable ou configurable.

EP 1 855 095 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03060448 A1
- DE 3612121 C2
- US 5949232 A
- GB 1020426 A